# EUROPÄISCHE PATENTSCHRIFT

(11) **EP 0 967 046 B1**
(45) Veröffentlichungstag und Bekanntmachung des Hinweises auf die Patenterteilung: **26.05.2004**
(21) Anmeldenummer: 99111868.8
(22) Anmeldetag: 21.06.1999
(51) Int. Cl.: B23Q 41/06, B23Q 39/02, B23Q 15/00, B23P 19/04

(54) **Fertigungs- und Montageautomat**
Manufacturing and mounting machine
Machine pour fabrication et montage

(30) Priorität: 24.06.1998 DE 19827983; 22.05.1999 DE 19923735
(43) Veröffentlichungstag der Anmeldung: 29.12.1999
(73) Patentinhaber: Feintool International Holding, 3250 Lyss (CH)
(72) Erfinder: Feintool International Holding, 3250 Lyss (CH)
(74) Vertreter: Graf, Helmut, Dipl.-Ing.

(56) Entgegenhaltungen:
- EP-A- 0 425 912
- DE-A- 3 532 382
- DE-A- 3 713 652
- DE-A- 19 526 616
- DE-A- 19 533 320

## Beschreibung

Die Erfindung bezieht sich auf einen Fertigungs- und Montageautomaten gemäß Oberbegriff Patentanspruch 1.

Montage- und Fertigungsautomaten sind in unterschiedlichsten Formen bekannt und werden z.B. zum automatischen Fertigen und/oder Montieren von Bauelementen oder Baugruppen aus einzelnen Komponenten verwendet, die (Komponenten) an Arbeitspositionen bzw. an dortigen Funktionseinheiten, nämlich Arbeitsstationen zugeführt werden. Auf Aufnahmen, die an den Arbeitsstationen getaktet vorbeibewegt werden, werden diese Komponenten dann zu dem jeweiligen Bauelement oder der jeweiligen Baugruppe sukzessiv zusammengebaut bzw. montiert. Die Arbeitspositionen können auch Prüfstationen sein.

Für eine einfache Projektierung und möglichst rationelle Herstellung solcher Montageund Fertigungsautomaten ist es zweckmäßig, zumindest für einzelne Funktionen, die in gleicher oder ähnlicher Form beim Montieren von Bauelementen oder Baugruppen unterschiedlicher Art benötigt werden, standardisierte Funktionseinheiten bzw. Arbeitsstationen und ggf. zugehörige Werkzeuge vorzusehen.

Weiterhin ist es üblich und notwendig, daß die einzelnen Funktionseinheiten Sensoren bzw. Abfragen, ggf. auch Aktoren, beispielsweise Pneumatikzylinder, und zugehörige elektrische Steuerventile aufweisen, die dann von einer zentralen Steuer- und Rechnereinheit unmittelbar oder mittelbar überwacht und/oder gesteuert werden, und zwar nach einem zentralen Steuerprogramm für die gesamte Maschine. Dieses zentrale Steuerprogramm muß u.a. die Art der an der Grundeinheit verwendeten Funktionseinheiten, deren Position und Anordnung usw. berücksichtigen.

Ein Fertigungs- und Montageautomat der gattungsbildenden Art in Form einer Rundtaktmaschine zur getakteten Bearbeitung von Werkstücken ist bekannt (DE-A-195 33 320).

Weiterhin ist es bekannt (DE-A-195 26 616) zur Bearbeitung von Längsprofilen, beispielsweise von Profilen, wie sie im Fensterbau Verwendung finden, das jeweilige Profil mit einem Barcode zu versehen, der beim Einführen des Profils in eine Bearbeitungsmaschine von einem Barcodeleser dieser Maschine ausgelesen wird, um dann dem jeweiligen Barcode entsprechend die das Längsprofil bearbeitenden Werkzeuge beispielsweise zum Einfräsen eines Fensterflügel-Falzes zu steuern.

Bekannt ist weiterhin ein Verfahren zum Anpassen einer numerischen Steuerung bei Bearbeitungs- oder Messmaschinen (EP-A-0 425 912), bei dem die Bewegungen der Maschine durch Abtasten einer Informationsspur mit einem Lesekopf erfasst und gespeichert werden. Diese Informationen werden dann zur automatischen Anpassung in die Steuerung übertragen.

Aufgabe der Erfindung ist es, einen Fertigungs- und Montageautomaten aufzuzeigen, der in besonders einfacher und zuverlässigen Weise die Berücksichtigung der verwendeten Funktionseinheiten, d.h. Arbeitsstationen und/oder Werkzeuge im Steuerablauf sicherstellt. Zur Lösung dieser Aufgabe ist ein Fertigungs- und Montageautomat entsprechend dem Patentanspruch 1 ausgebildet.

Eine Besonderheit der Erfindung besteht darin, daß jede Funktionseinheit mit einer Codierung versehen ist, die zumindest die Art dieser Funktionseinheit angibt, und daß diese Codierung über die zwischen den einzelnen Funktionseinheiten und der zentralen Steuereinheit bestehende Datenübertragung an letztere übertragen wird. Hierdurch ergeben sich eine Reihe von sehr vorteilhaften Möglichkeiten, beispielsweise eine automatische Berücksichtigung der für die einzelnen Funktionseinheiten erforderlichen Steuer- und Überwachungsfunktionen im zentralen Steuerprogramm, eine Überprüfung des zentralen Steuerprogramms auf seine Konformität mit dem für die einzelnen Funktionseinheiten jeweils erforderlichen Steuer- und Prüfprogramm usw.

Die Codierung wird beispielsweise an einem Datenausgang der Elektronik der jeweiligen Funktionseinheit geliefert und ist in dieser Elektronik z.B. in einem Chip oder aber durch eine entsprechende Kontaktierung, beispielsweise unter Verwendung von Kontaktbrücken usw. abgelegt. Erfolgt die Datenübertragung über eine von elektrischen Leitern gebildete Datenverbindung, beispielsweise über einen Leiterbus, so kann die Codierung im einfachsten Fall auch durch entsprechende Belegung von Kontakten eines Mehrfachsteckers oder einer Mehrfachbuchse erfolgen, die zum Anschluß an den Bus dient.

Die erfindungsgemäße Ausbildung gestattet es weiterhin eine ständige Überprüfung des Steuerprogramms in der Weise, daß bestimmte Programmabläufe für bestimmte Arbeitsstationen und/oder Werkzeuge nur dann durchgeführt werden, wenn die Codierung dieser Arbeitsstationen und/oder Werkzeuge mit dem jeweiligen Programmablauf übereinstimmt.

Unter "Funktionseinheit" ist im Sinne der Erfindung eine Einheit zu verstehen, mit der die an einer Arbeitsposition notwendigen Arbeiten und/oder Funktionen durchgeführt werden, während die "Grundeinheit" im wesentlichen nur dem Weitertransport der Aufnahmen von Arbeitsposition zu Arbeitsposition dient. Die Grundeinheit ist beispielsweise eine solche mit einem um eine vertikale Maschinenachse drehbar angetriebenen Rotor, an welchem die Aufnahmen vorgesehen sind.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung einen Vertikalschnitt durch einen Fertigungsautomaten gemäß der Erfindung;

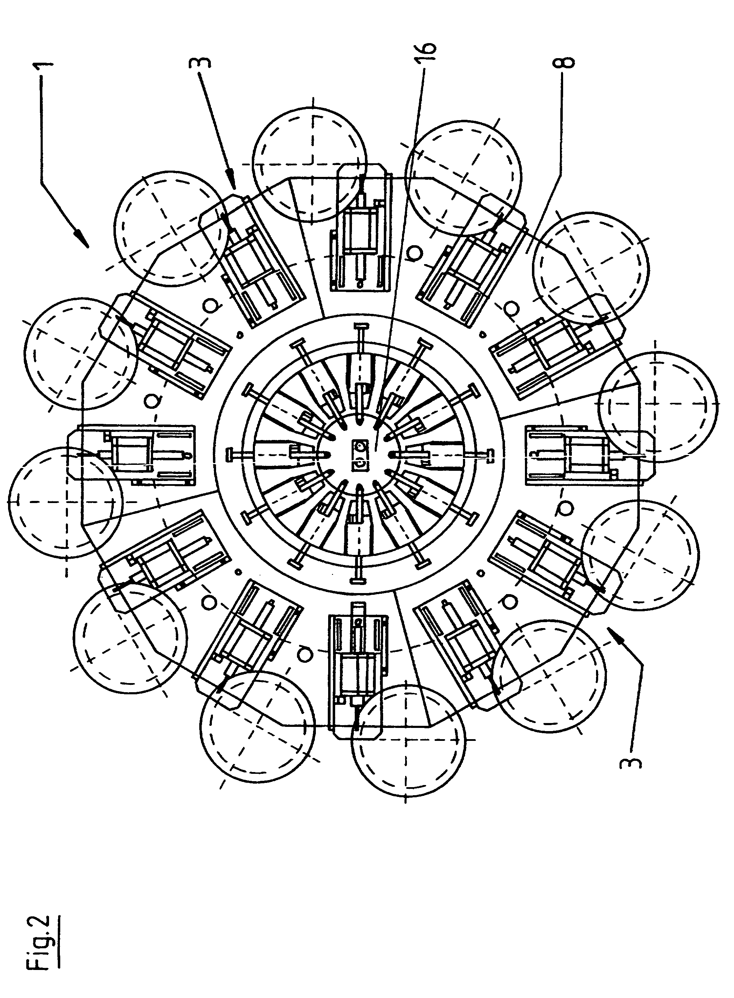

- Fig. 2: in vereinfachter Darstellung eine Draufsicht auf den Automaten der Figur 1;
- Fig. 3: ein vereinfachtes Schema über den Verfahrensablauf bei der Masch i nenkonfiguration;
- Fig. 4 und 5: jeweils das Verbindungsschema der Grundmaschine mit einer ersten Gruppe von Funktionseinheiten von Arbeitsstationen und einer zweiten Gruppe von Funktionseinheiten der Arbeitsstationen;
- Fig. 6 und 7: jeweils in Draufsicht den Versorgungsstecker bzw. den Versorgungsgegenstecker zum Anschluß einer Funktionseinheit, insbesondere einer Funktionseinheit der zweiten Gruppe.

Der in den Figuren dargestellte und dort allgemein mit 1 bezeichnete Fertigungsautomat dient beispielsweise zum Herstellen oder Montieren von Bauteilen oder Baugruppen aus einer Vielzahl von Einzelteilen oder -Komponenten, die dem Fertigungsautomaten bzw. dessen Arbeitsstationen 4 zugeführt werden. Der Automat 1 eignet sich insbesondere auch zum Montieren von besonders kleinformatigen, mechanischen und/oder elektromechanischen Bauteilen, insbesondere Mikroschaltem usw.

Der Fertigungsautomat 1 besteht im wesentlichen aus einer Grundeinheit 2, an der einer Vielzahl von Arbeitspositionen 3 um eine vertikale Mittel- oder Maschinenachse V verteilt gebildet sind. An jeder Arbeitsposition 3 ist beispielsweise wenigstens eine Arbeitsstation 4 vorgesehen, wobei diese Stationen 4 sehr unterschiedlich ausgebildet sind, und zwar insbesondere abhängig von den an der jeweiligen Arbeitsposition 3 durchgeführten Verfahrensschritten, den zugeführten und/oder verarbeiteten Bauelementen usw. So dienen beispielsweise einige Stationen 4 dazu, Bauelemente an die jeweilige Arbeitsposition 3 zuzuführen und an dieser Arbeitsposition in einer vorgegebenen Lage und/oder Orientierung bereitzustellen, wobei vorher z.B. die Bauelemente vereinzelt, das Vorhandensein der Bauelemente und/oder deren richtige Orientierung und Lage überprüft werden usw. Einige Arbeitspositionen 3 sind beispielsweise nur oder auch Meß- oder Prüfpositionen, wobei die Arbeitsstationen 4 dort dann als Meß- oder Prüfstationen ausgeführt sind .

Bei der in den Figuren dargestellten Ausführungsform ist weiterhin den Arbeitspositionen 3 jeweils eine Hubeinrichtung 5 mit einem Werkzeugträger 6 zugeordnet, der synchron mit dem Antrieb bzw. mit dem Arbeitstakt der Grundeinheit 2 einen horizontalen Hub (Doppelpfeil A) und/oder einen vertikalen Hub (Doppelpfeil B) ausführen kann. An dem Werkzeugträger 6 können unterschiedlichste Werkzeuge 26, beispielsweise Greifer, Einleger, Meßkontakte, Niet- oder Stanzwerkzeug usw. vorgesehen werden, die dann mit der an der jeweiligen Arbeitsposition 3 auch vorgesehenen Station 4 zum Durchführen der dortigen Arbeit zusammenwirken. Bei einigen Arbeitspositionen 3 kann auch auf die Hubeinrichtung 5 verzichtet sein.

Die Grundeinheit 2 besitzt ein Maschinengestell oder Gehäuse 7, in welchem u.a. der mechanische Antrieb der Grundeinheit vorgesehen ist und an welchem bei der dargestellten Ausführungsform außen ein ringförmiger, von einer Vielzahl von Segmenten gebildeter und am Umfang polygonartig überstehender Tisch 8 befestigt ist, der zur Befestigung u.a. der Arbeitsstationen 4 dient. Der Tisch 8 ist an einem unteren Abschnitt 7' des Maschinengestells 7 vorgesehen.

An der Oberseite besitzt das Maschinengestell 7 einen Abschnitt 7", an welchem eine die Achse V konzentrisch umschließende vertikale Säule 9 mit ihrem unteren Ende befestigt ist. Die über die Oberseite des Abschnittes 7" vorsteht. An der Säule 9 ist eine Hohlwelle 10 drehbar gelagert, die mit ihrem oberen Ende an einem Rotor oder drehbaren Tischelement 11 befestigt ist. Das untere Ende der Hohlwelle 10 ist mit dem Antrieb 12 verbunden, welcher eine getaktete Drehbewegung des Tisches 11 um die Achse V bewirkt, und zwar über einen Malteserantrieb, der von einem Elektromotor 13 angetrieben wird. An der nicht mit drehenden Säule 9 ist oberhalb des Tischelementes 11 ein Tischelement 14 befestigt, welches ebenso wie das Tischelement 11 kreisscheibenförmig ausgebildet ist und mit seiner Achse achsgleich mit der Achse V liegt. Das Tischelement 11 steht mit einem Umfangsbereich 11' über den Rand des Tischelementes 14 vor. Am Umfangsbereich 11' sind Aufnahmen 15 befestigt, die jeweils zur Aufnahme einer Baugruppe oder eines Bauelementes dienen und an ihrer Oberseite ein entsprechendes "Nest" aufweisen, in dem die zunehmend zu den gewünschten Produkt montierten Baugruppen jeweils in einer genau vorgegebenen Orientierung und Positionierung angeordnet sind. In jedem Arbeitstakt des Antriebes, der wenigstens aus einem Bewegungsschritt und einer anschließenden Stillstandszeit besteht, werden die Aufnahmen 15 um eine Maschinenteilung um die Achse V weiterbewegt. Die Arbeitspositionen 3 sind dieser Maschinenteilung entsprechend um die Achse V angeordnet.

Für die Bewegungen der auf dem nicht drehenden Tischelement 14 angeordneten Hubeinrichtungen 5 sind von dem Antrieb 12 betätigte Hubstangen 16 und 17 vorgesehen, die jeweils eine für sämtliche Einrichtungen 5 gemeinsame Steuerscheibe 18 bzw. 19 aufweisen. Mit diesen wirken Hebelanordnungen 20 und 21 der Hubeinrichtungen 5 zusammen, um synchron mit der Bewegung der Hubstangen 16 bzw. 17 und damit synchron mit dem Antrieb 12 die jeweiligen Bewegungen auszuführen.

Wie oben bereits erwähnt wurde, sind die Arbeitsstationen 4 dem Arbeitsvorgang an der jeweiligen Arbeitsposition 3 entsprechend unterschiedlich ausgeführt und mit unterschiedlichsten Sensoren 22, Aktoren 23 (beispielsweise Pneumatikzylindern) oder anderen elektrischen oder mechanischen Antrieben, Steuerelementen 24, beispielsweise Steuerventilen usw. ausgeführt. Weiterhin besitzt bei der dargestellten Ausführungsform jede Arbeitsstation 4 eine Mikroprozessor gestützte Elektronik 25, die u.a. mit den vorgenannten Sensoren, Aktoren, Steuerventilen usw. zusammenwirkt bzw. deren Signale empfängt und/oder diese Elemente ansteuert.

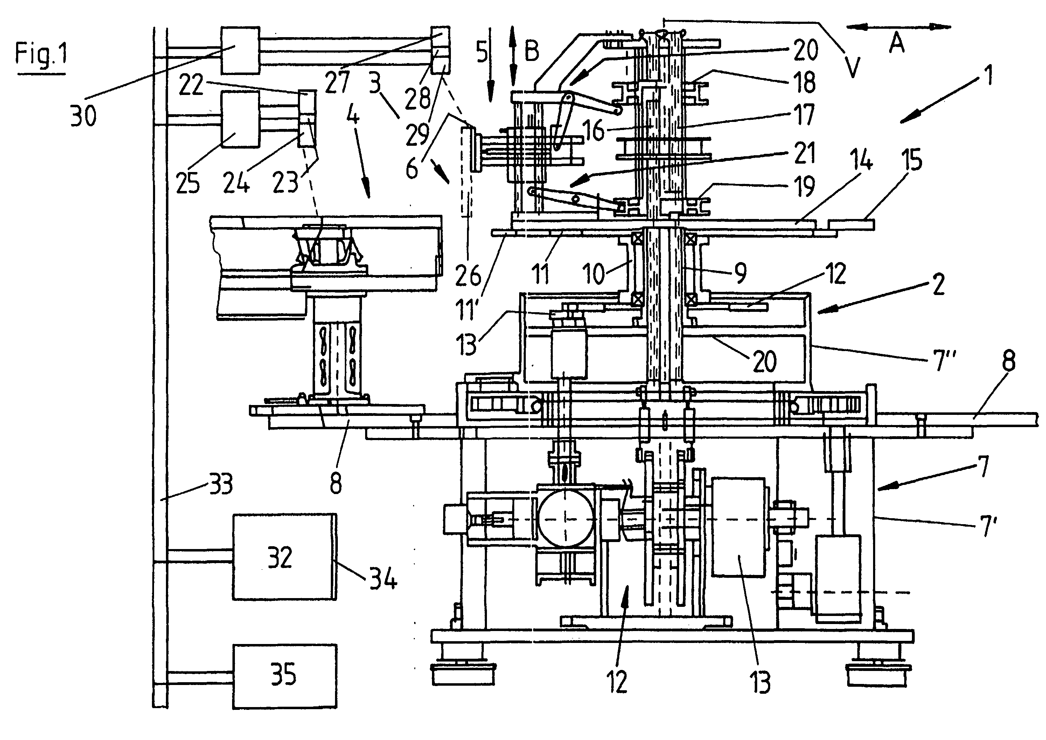

Mit 26 ist in der Figur 1 sehr allgemein eines der an den Trägem 6 der Hubeinrichtungen 5 befestigten Werkzeuge dargestellt. Dieses Werkzeug 26 besitzt ebenfalls Abfragen bzw. Sensoren 27, die beispielsweise die Position und/oder den Zustand des Werkzeuges 26 (z.B. geöffneter und/oder geschlossener Zustand einer Zange) überwachen, und/oder Aktoren 28 zum Betätigen des Werkzeuges 26 oder Teile dieses Werkzeuges (z.B. zum Öffnen und Schließen von Greifern oder Zangen) und/oder Steuerventile 29, beispielsweise zum Öffnen und Schließen eines an eine Düse führenden Vakuumkanals oder eines Kanals für Blasluft usw. Auch dem Werkzeug 26 ist beispielsweise eine Mikroprozessor gestützte Elektronik 30 zugeordnet, die mit den Elementen 27 - 29 des Werkzeugs 26 zusammenwirkt. Da die Elemente 22 - 24 bzw. 27 - 29 hinsichtlich ihrer Anzahl und/oder Anordnung an der Arbeitsstation 4 bzw. am Werkzeug 26 je nach Funktion sehr unterschiedlich sein können, sind in der Figur 1 diese Elemente jeweils als Block angegeben, der mit der unterbrochenen Linie auf die Arbeitsstation 4 bzw. auf das Werkzeug 26 bezogen ist. Tatsächlich sind diese Elemente und die zugehörige Elektronik 25 bzw. 30 fester Bestandteil der jeweiligen Arbeitsstation bzw. des jeweiligen Werkzeuges 26.

Da bei der Herstellung selbst unterschiedlicher Produkte jeweils gleiche oder doch sehr ähnliche Arbeitsschritte erforderlich sind, ist nicht nur die Grundeinheit 2 des Fertigungsautomaten 1 standardisiert, sondern zumindest zum Teil sind auch die Arbeitsstationen 4 und zugehörigen Werkzeuge 26 standardisierte, an die jeweilige Funktion angepaßte, voll funktionsfähige Baueinheiten, die dem Fertigungsverfahren bzw. dem Verfahrensablauf entsprechend an den betreffenden Arbeitspositionen 3 montiert werden, und zwar z.B. zusammen mit dem zugehörigen Werkzeug 26 an der zugehörigen Hubeinrichtung 5. Derartige standardisierte Arbeitsstationen 4 sind beispielsweise Stationen zum Zuführen und/oder Vereinzeln und/oder Einsetzen und Montieren von Federn und/oder Kontakten und/oder Gehäuseteilen, elektrische und/oder mechanische Prüf- und Meßstationen, Stationen zum Herstellen von Schraubund Nietverbindungen usw.

Mit 32 ist eine zentrale, Mikroprozessor- oder Computer gestützte Steuereinrichtung bezeichnet, die zur zentralen Überwachung und/oder Steuerung sämtlicher Arbeitsstationen 4 und deren zugehörigen Werkzeuge 26 dient und die für diesen Zweck über Datenverbindungen 33 mit den Arbeitsstationen 4 und Werkzeugen 26 bzw. mit deren Elektronik 25 bzw. 30 in Verbindung steht, und zwar beispielsweise über ein mehrere elektrische Leiter aufweisendes elektrisches Bussystem, vorzugsweise aber über einen Lichtleiterbus.

Die zentrale Steuereinheit 32 enthält u.a. das Programm für die Überwachung und/oder Steuerung der einzelnen Arbeitsstationen 4 und zugehörigen Werkzeuge 26, wobei für jeden Typ der Arbeitsstationen 4 bzw. Werkzeuge 26 jeweils ein gesondertes Teil- oder Unterprogramm 34 vorgesehen ist.

Jede Arbeitsstation 4 und jedes Werkzeug 26 besitzt bei der vorhandenen Maschinenkonfiguration, d.h. bei der gewählten Anordnung der Arbeitsstationen 4 an der Grundmaschine oder Grundeinheit 2 eine Codierung, die u.a. zumindest eine mehrstellige Stationscodierung oder Geräteidentifikation IG aufweist, die den Typ der Arbeitsstation bzw. des Werkzeuges 26 bestimmt. Diese Gerätenidentifikation IG ist in der Elektronik 25 bzw. 30 der betreffenden Arbeitsstation 4 bzw. des Werkzeuges 6 fest abgelegt. Auch solche Arbeitsstationen 4 bzw. Werkzeuge 26, die nicht einem Standart-Typ entsprechen, d.h. eine Sonderanfertigung für eine spezielle Aufgabe darstellen, besitzen eine in der Elektronik 25 bzw. 30 fest abgelegte Geräteidentifikation IG, die die Arbeitsstation 4 bzw. das Werkzeug 26 eines solchen nicht standardisierten Typs identifiziert oder festlegt.

Die Codierung enthält noch weitere Informationen, beispielsweise auch sich ändernde Identifikationen wie z.B. eine Ortscodierung oder-Identifikation IP, die die Position der jeweiligen Arbeitsstation 4 an der Grundeinheit 2, d.h. die jeweilige Arbeitsposition 3 angibt, an der die betreffende Arbeitsstation 4 vorgesehen ist. Für die Identifikation IP ist beispielsweise am Maschinengestell 7 und/oder an den Werkzeugträgem 6 eine Codierung vorgesehen, die mit einer entsprechenden Codiereinrichtung der Elektronik 25 bzw. 30 erfaßt und/oder abgetastet wird.

Die Codierungen der Arbeitsstationen 4 und der Werkzeuge 26 werden über die Datenverbindung 33 an die zentrale Steuereinheit 32 übermittelt. Aufgrund dieser Codierungen ist dann beispielsweise eine Überprüfung der tatsächlichen Maschinenkonfiguration (= Konfiguration) mit einer Sollkonfiguration und der hieraus sich ergebenden Programmierung der zentralen Steuereinheit möglich. Weiterhin können die Codierungen der Arbeitsstationen 4 und der Werkzeuge 26 auch für eine vereinfachte Programmierung der zentralen Steuereinheit 32 möglich, und zwar durch Abrufen von Standart-Unter-Programmen 34, die für den jeweiligen Typ einer standardisierten Arbeitsstation 4 bzw. eines standardisierten Werkzeugs 26 bereits hinterlegt sind oder auf einem Datenträger usw. zur Verfügung stehen. Weiterhin ist mit den an die zentrale Steuereinheit 32 übermittelten Codierungen auch eine Überprüfung und/oder Überwachung des Steuerprogramms der Maschine 1 bzw. der einzelnen Arbeitsstationen möglich.

Da bei der beschriebenen Ausführungsform einige Funktionen der Maschine, nämlich das Weiterbewegen des Drehtisches 11 und der dortigen Aufnahmen 15, die Bewegungen der Werkzeugträger 6 an den Hubeinrichtungen 5 zwangsgesteuert durch den Antrieb 12 erfolgen, ist der Ablauf des Steuer- und Überwachungsprogramms der zentralen Steuereinrichtung 32 für die einzelnen Arbeitsstationen 4 und zugehörigen Werkzeuge 26 mit dem Antrieb des Automaten 1 synchronisiert.

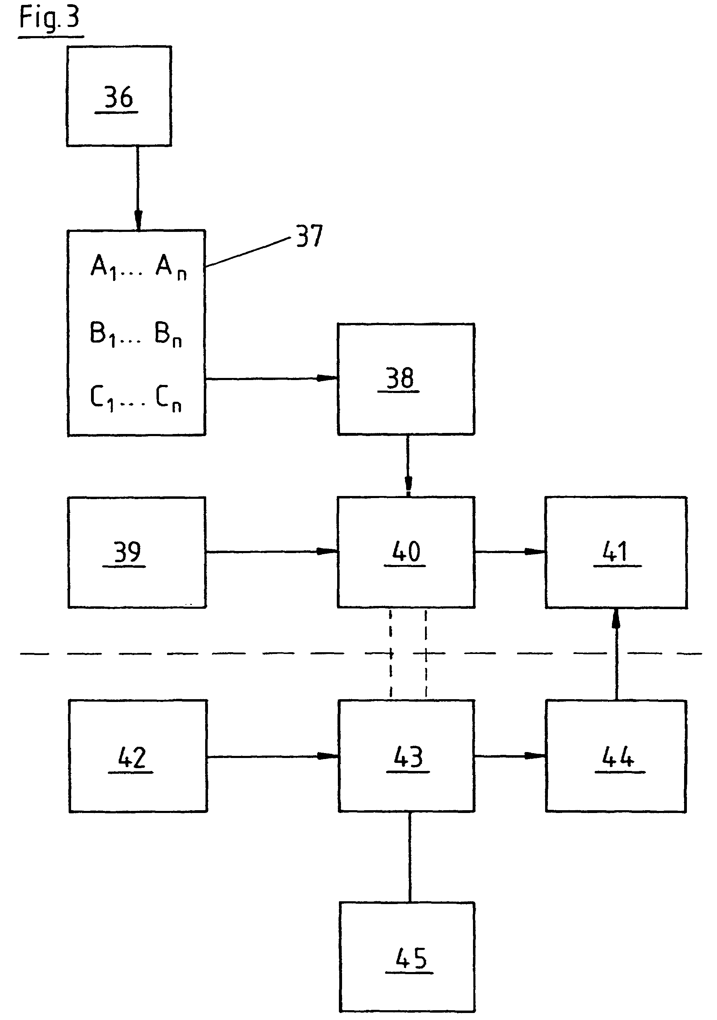

Vorstehend wurden die Möglichkeiten der Ausbildung der Steuerung der Arbeitsstationen 4 bzw. der Funktionselemente dieser Arbeitsstationen allgemein beschrieben. Die Figur 3 zeigt nun in vereinfachter Darstellung und als Schema die Vorgehensweise bei der Konfigurierung und Programmierung einer Grundeinheit bzw. Grundmaschine 2 mit den für die Herstellung eines bestimmten Produktes notwendigen Arbeitsstationen bzw. Funktionselementen 4. Die Maschinenkonfiguration und die aus der Konfiguration sich ergebende Programmierung der Steuereinheit 32 erfolgt beispielsweise unter Verwendung eines speziellen Rechners 35, der z.B. während der Konfiguration über eine Datenleitung mit der Steuereinheit 32 verbunden ist. Selbstverständlich besteht auch die Möglichkeit, daß die Steuereinheit 32 selbst als Rechner für die Erstellung der Sollkonfiguration und des Maschinenprogramms auszubilden.

Entsprechend dem in der Figur 3 wiedergegebenen Schema wird ausgehend von dem herzustellenden Produkt 36 zunächst unter Berücksichtigung der in einer Typenverwaltung 37 vorhandenen Funktionselemente, unter Festlegung der zeitlichen Abfolge der für die Herstellung des Produktes 36 notwendigen Arbeitsgänge (Block 38) sowie unter Festlegung der Positionen der einzelnen Funktionseinheiten bzw. der von diesen gebildeten Arbeitsstationen an der Grundeinheit 2 (Block 39) eine Sollmaschinenkonfiguration (Block 40) erstellt. In der Figur 3 sind die einzelnen Typen von Funktionseinheiten mit A_{1*}._{.-An}, B₁..., Bₙ und C₁...Cₙ bezeichnet, wobei die Funktionselemente A solcher einer ersten Gruppe mit einer vereinfachten Funktion und Steuerung und die Funktionselemente B und C solche einer zweiten Gruppe sind, die eine komplexere Funktion und Ansteuerung haben und damit ein komplexeres Steuerprogramm benötigen. Unter Berücksichtigung der Sollkonfiguration wird dann das Steuerprogramm für die Maschine erstellt (Block 41). Hierbei kann weitestgehend auf für die einzelnen Funktionselemente A₁...Aₙ, B₁...Bₙ und C₁...Cₙ in der Konfigurations- und Programmiereinheit 35 abgelegte Teilprogramme zurückgegriffen werden, aus denen dann die Einheit 35 zumindest weitestgehend selbständig das Gesamt-Steuerprogramm erstellt.

Ist die Anzahl der Arbeitspositionen 3 an der Grundmaschine größer als die für die Herstellung des Produktes 36 benötigte Anzahl, so besteht die Möglichkeit, an ein und derselben Grundmaschine 2 eine weitere Prozeßlinie zur Herstellung des gleichen Produktes 36 oder aber eines anderen Produktes 36 durch Konfiguration der in der ersten Prozeßlinie nicht benötigten Arbeitspositionen einzurichten, wobei dann aus den einzelnen Sollkonfigurationen das Gesamtsteuerprogramm der Maschine 1 erstellt wird.

Die verschiedenen Typen A, B und C für die Funktionseinheiten, die zugehörigen Programme usw. sind als Datenbank in der Konfiguration- und Programmiereinheit abgelegt.

Aufgrund der Sollkonfiguration erfolgt dann der Aufbau der einzelnen Arbeitsstationen 4 aus den bei der Sollkonfiguration festgelegten Funktionselementen A, B bzw. C an den einzelnen, ebenfalls bei der Sollkonfiguration festgelegten Arbeitspositionen 3 der Grundmaschine 2. Diese Ist-Konfiguration (Block 42) wird dann nach ihrer Fertigstellung mit der Sollkonfiguration verglichen (Block 43). Dieser Vergleich wird von der Konfigurations- und Programmiereinheit 35 selbsttätig durchgeführt und ist dadurch möglich, daß dieser mit der Steuereinheit 32 verbundenen Konfigurationsund Programmiereinheit 35 über die Geräteidentifikationen IG und die zugehörigen Ortsidentifikationen IP genaue Informationen über die Ist-Konfiguration vorliegen, d.h. insbesondere auch darüber, welche Arbeitspositionen 3 tatsächlich mit Funktionselementen besetzt sind und welches Funktionselement sich jeweils an welcher Arbeitsposition befindet.

Ergibt die Prüfung eine Übereinstimmung der Ist-Konfiguration mit der Sollkonfiguration, so wird dies bestätigt und beispielsweise wird das Steuerprogramm 41 für einen Probelauf der Maschine freigegeben (Block 44). Wird keine Übereinstimmung zwischen der Sollkonfiguration und der Ist-Konfiguration festgestellt, so wird dies angezeigt und zur Überprüfung der Ist- und/oder Sollkonfiguration aufgefordert (Block 45).

Die Funktionseinheiten sind beispielsweise Transfer- oder Umsetzelemente mit pickand- place-Funktion oder einfache Meßsonden oder Überwachungssensoren usw. Die Funktionselemente B und C sind beispielsweise komplexere Zuführungen von Bauteilen, wie z.B. von Federn, Verbindungselementen, Kontakten, Gehäuseteilen usw. oder aber Funktionselemente zum Durchführen von speziellen Ver- oder Bearbeitungsschritten, Meßeinrichtungen usw.

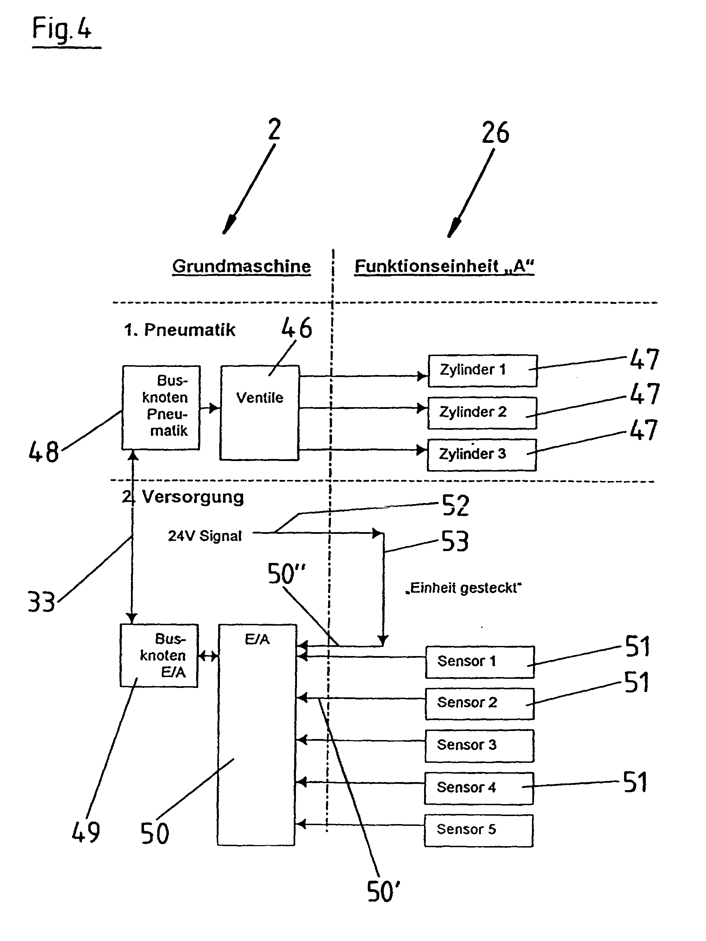

In der Figur 4 ist die Verbindung der Grundmaschine mit den Funktionseinheiten der Gruppe A dargestellt, und zwar hinsichtlich der Signal und Energieversorgung, wobei der einfacheren Darstellung wegen nur eine der Funktionseinheiten A gezeigt ist.

Die Funktionseinheiten der Gruppe A sind bei der dargestellten Ausführungsform insbesondere solche, die an den beweglichen Werkzeugträgem 6 der Grundmaschine 2 vorgesehen sind. Die Funktionselemente der Gruppe B und C sind insbesondere solche, die am Tisch 8 der Grundeinheit 2 und um das umlaufende Tischelement 11 verteilt angeordnet sind. Die einzelnen Arbeitsstationen sind dann zumindest zum Teil jeweils von wenigstens einem Funktionselement der Gruppe A und einem Funktionselement der Gruppe B bzw. C gebildet.

Wie vorstehend bereits ausgeführt wurde, erfolgt die Datenübertragung und Ansteuerung der einzelnen Funktionselemente über den Datenbus 33, der in der Figur 4 nochmals angegeben ist. Für sämtliche Funktionselemente A oder aber für jeweils eine bestimmte Anzahl solcher Funktionselemente sind an der Grundmaschine beispielsweise zu einem Block zusammengefaßt die Steuerelemente 46 für die Ansteuerung der Betätigungselemente 47 dieser Funktionseinheiten A vorgesehen. Bei der in der Figur 4 wiedergegebenen Ausführung sind die Steuerelemente Ventile und die Betätigungselemente 47 über diese Ventile betätigte Pneumatikzylinder. Für die Steuerelemente 46 ist an der Grundmaschine 2 weiterhin ein Busknoten 48 vorgesehen, der in Abhängigkeit von dem über den Bus 33 übertragenen Befehlen die Steuereinrichtung 46 zum Betätigen des jeweiligen Betätigungselementes 47 steuert.

Analog zur Ansteuerung der Betätigungselemente 47 ist für sämtliche Funktionseinheiten A oder aber für jeweils eine Gruppe von Funktionseinheiten ein gemeinsamer Busknoten 49 vorgesehen, der mit wenigstens einer ebenfalls an der Grundmaschine 2 vorgesehenen Eingangs- und Ausgangselektronik oder -Einheit 50 verbunden ist, an der die Sensoren 51 jeder Funktionseinheit A angeschlossen sind. Die Einheit 50 besitzt für die Sensoren 51 sämtlicher Funktionseinheiten A Eingänge 50'. Weiterhin besitzt die Einheit 50 für jede Funktionseinheit A einen Eingang 50", an dem dann ein Gleichspannungssignal anliegt, wenn an der entsprechenden Arbeitsposition 3 eine Funktionseinheit A angeschlossen bzw. "gesteckt" ist, d.h. eine die Gleichspannung führende Leitung 52 der Grundmaschine 2 über die in jeder Funktionseinheit A vorhandene Brücke 53 mit dem Anschluß 50" verbunden ist.

Die Verbindung jeder Funktionseinheit A mit der Grundmaschine 2 erfolgt über einen an der Funktionseinheit A vorgesehenen Stecker und einen entsprechenden Gegenstecker, der an der Grundmaschine 2 an jeder Arbeitsposition 3 vorgesehen ist, wobei in dem Stecker der jeweiligen Funktionseinheit A beispielsweise auch die Brücke 53 vorgesehen ist. Der Stecker und Gegenstecker sind so ausgeführt, daß diese Steckerverbindung gemeinsam für die gesamte Signal- und Energieversorgung ist.

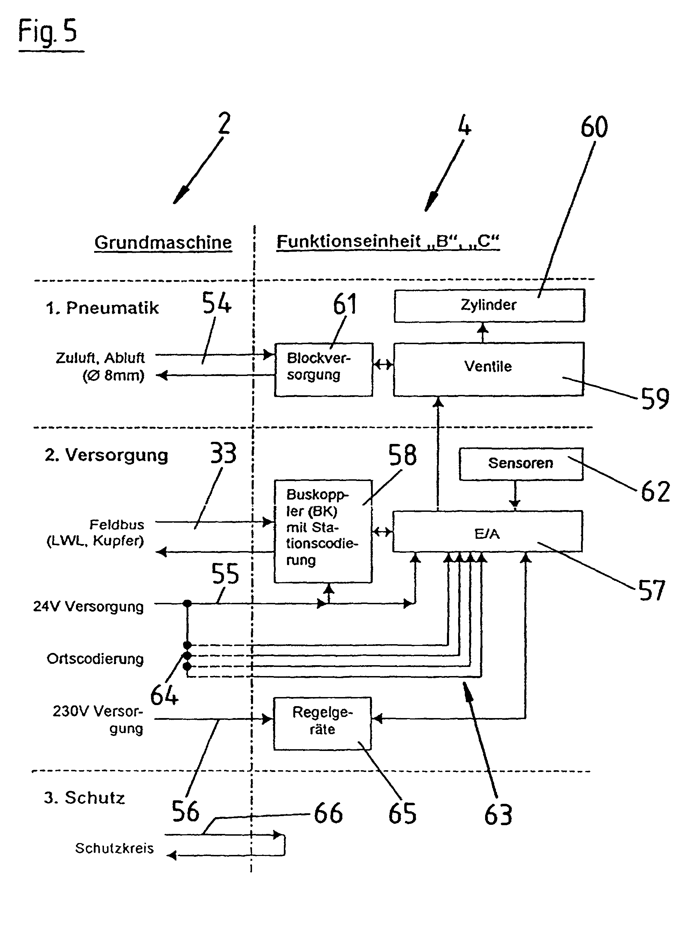

Die Figur 5 zeigt in ähnlicher Darstellung wie die Figur 4 das Schema der Verbindung der Funktionseinheiten B und C mit der Grundmaschine 2, wobei der einfacheren Darstellung wegen auch hier wiederum nur die Verbindung einer solchen Funktionseinheit mit der Grundmaschine wiedergegeben ist.

in der Figur 5 ist wiederum mit 33 der Daten- und Steuerbus angedeutet. Weiterhin ist in der Figur 5 mit 54 die an der Grundmaschine 2 vorgesehene Pneumatik-Versorgung bezeichnet, d.h. bei der dargestellten Ausführungsform eine Leitung für Zuluft und eine Leitung für Abluft. Mit 55 ist eine elektrische Niederspannungsversorgung bezeichnet, und zwar zur Versorgung von elektronischen Schaltkreisen usw. der jeweiligen Funktionseinheit B/C. Mit 56 ist weiterhin eine Netzspannungsversorgung an der Grundeinheit für Funktionseinheiten B bzw. C angegeben.

Wie die Figur 5 zeigt, besitzt jede Funktionseinheit B/C ihre eigene Elektronik 57 sowie ihren eigenen Buskoppler 58, über den die Elektronik 57 mit dem Daten- und Steuerbus 33 zusammenwirkt. Die Elektronik 57 steuert die ebenfalls für jede Funktionseinheit P/C gesondert vorgesehenen Ventile 59 an, und zwar zum Betätigen der Betätigungselemente bzw. Zylinder 60. Die Ventile 59 sind über eine Blockversorgung 61 an die Pneumatik-Versorgung 54 angeschlossen.

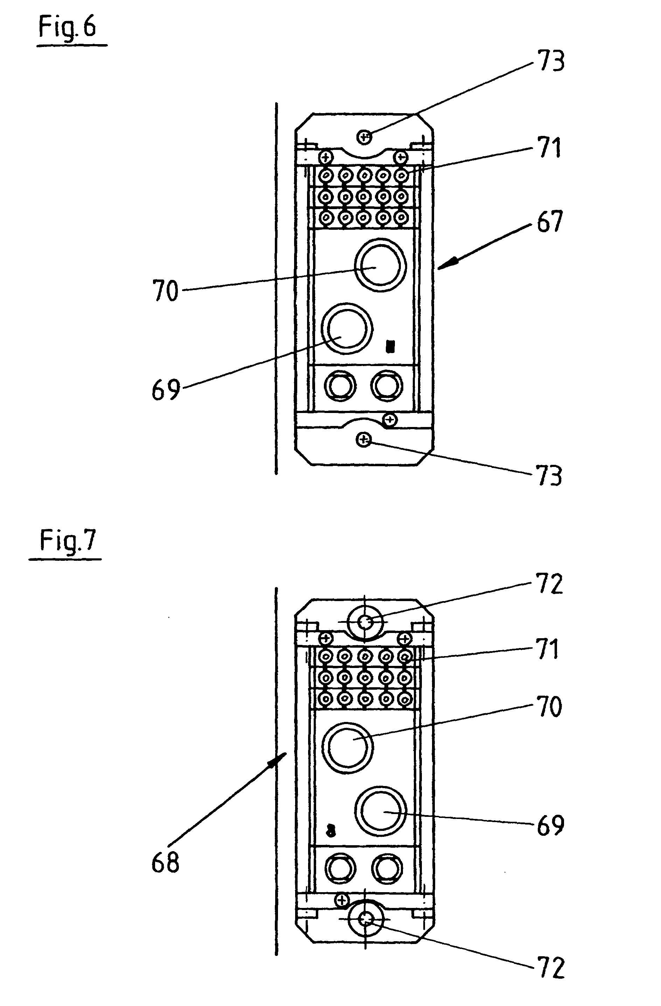

Mit der Elektronik 57 sind weiterhin Sensoren 62 der jeweiligen Funktionseinheit B/C verbunden. Weiterhin weist die Elektronik 57 Eingänge 63 auf, an denen bei an der Grundmaschine 2 montierter Funktionseinheit B/C ein Signal anliegt, welches der Ortsidentifikation IP der jeweiligen Arbeitsposition 3 entspricht, an der die Funktionseinheit montiert ist. Das Signal an den Eingängen 63 wird von einer an der jeweiligen Arbeitsposition 3 vorgesehenen, beispielsweise von einer entsprechenden Verdrahtung gebildeten Ortscodiereinheit 64 erzeugt. Bei der dargestellten Ausführungsform weist die Funktionseinheit B/C noch ein Regelgerät 65 auf, welches beispielsweise gesteuert durch die Elektronik 57 nicht dargestellte elektrische Funktionselemente steuert. Weiterhin ist die Funktionseinheit B/C an einen Schutzkreis 56 (Schutzerde) der Grundmaschine 2 angeschlossen. Die gesamte Signal- und Energieverbindung zwischen der Grundeinheit und der Funktionseinheit B/C erfolgt über eine an der jeweiligen Funktionseinheit vorgesehenen gemeinsamen Stecker und einen an der jeweiligen Arbeitsposition vorgesehenen Gegenstecker, und zwar vorzugsweise derart, daß beim Positionieren der jeweiligen Funktionseinheit an einer Arbeitsposition zusätzlich zu dem mechanischen Ausrichten und Fixieren der Funktionseinheit auch die Verbindung zwischen dem Stecker und den Gegenstecker erfolgt. In der Figur 6 ist ein derartiger Gegenstecker 67 dargestellt, der an jeder Arbeitsposition 3 vorgesehen ist. Die Figur 7 zeigt den hierfür passenden Stecker, der an jedem Funktionselement B/C vorgesehen ist.

Über den Buskoppler 58 und die Elektronik 57 erfolgt in Abhängigkeit von den über den Bus 33 übermittelten Steuersignalen die Ansteuerung der Zylinder 60 sowie der Regelgeräte 56. Weiterhin erfolgt über den Buskoppler 58 auch die Übertragung der Signale der Sensoren 62. Die Elektronik 57 bildet aus der in dieser Elektronik abgelegten Geräteidentifikation IG, die den Typ der Funktionseinheit B/C definiert und auf dem von der Codiereinrichtung 64 abgeleiteten und am Eingang 63 anliegenden Ortsidentifikation IP eine Gesamtcodierung, die auf Anfrage ebenfalls über den Buskoppler 58 und den Daten- und Steuerbus 33 an die Steuereinheit 32 übertragen wird.

Wie die Figur 5 weiterhin zeigt, ist der Steuer- und Datenbus durch die Buskoppler 58 der einzelnen Funktionseinheiten B/C durchgeschleift. Hierdurch ergibt sich eine besonders einfache Ausbildung dieses Busses, insbesondere auch in Form eines Lichtleiterbusses. An Arbeitspositionen 3, an denen keine Funktionseinheit B/C vorgesehen ist, wird eine Leereinheit positioniert, die dann im wesentlichen nur die Elektronik 57 mit den mit der Codiereinrichtung 64 zusammenwirkenden Eingängen und den Buskoppler 58 aufweist und entsprechende Identifikationen IP und IG liefert.

Über den Stecker 68 und den Gegenstecker 67 erfolgt der Anschluß sämtlicher Leitungen für die Signal- und Energieübertragung. Die Stecker besitzen hierfür zwei Anschlüsse 69 und 70 für die Zuluft- und Abluft (Versorgung 54), wobei zumindest der Anschluß für die Zuluft an den an der Grundmaschine 2 vorgesehenen Gegenstecker so ausgebildet ist, daß er automatisch bei abgenommenen Stecker 68 verschlossen ist. Vorgesehen sind an dem Stecker 68 und Gegenstecker 67 weiterhin mehrere elektrische Kontakte 71 für die elektrischen Signalleitungen. Weiterhin sind am Stecker Zentrierstifte 72 vorgesehen, denen entsprechende Zentrieröffnungen 73 am Gegenstecker 67 zugeordnet sind.

Die Erfindung wurde voranstehend an einem Ausführungsbeispiel beschrieben. Es versteht sich, daß zahlreiche Änderungen sowie Abwandlungen gemäss den beiliegenden Patentansprüchen möglich sind.

So ist es beispielsweise möglich, daß die Sensoren 27 und/oder Aktoren 28 und/oder Ventile 29 usw. der Werkzeuge 26 zumindest teilweise auch an der zugehörigen Arbeitsstation 4 vorgesehen und/oder über Verbindungen mit dieser Arbeitsstation bzw. mit der dortigen Elektronik 25 verbunden sind, wobei die von der Elektronik 25 gelieferte Codierung dann beispielsweise zusätzlich noch eine Identifikation IW enthält, die das jeweilige, der Arbeitsstation 4 zugeordnete Werkzeug 26 angibt.

So ist es weiterhin auch möglich, die Elektronik 30 der jeweiligen Hubeinrichtung 5 zuzuordnen, wobei die von dieser Elektronik 30 dann abgegebene Codierung sich entsprechend dem an der Hubeinrichtung 5 vorgesehenen Werkzeug 26 ändert.

### Bezugszeichenliste

- 1: Fertigungsautomat
- 2: Grundeinheit
- 3: Arbeitsposition
- 4: Arbeitsstation
- 5: Hubeinrichtung
- 6: Werkzeugträger
- 7: Maschinengestell
- 7', 7": Maschinengestellabschnitt
- 8: Tisch
- 9: Säule
- 10: Hohlwelle
- 11: Tischelement
- 11': Umfangsbereich
- 12: Antrieb
- 13: Motor
- 14: Tischelement
- 15: Aufnahme
- 16,17: Hubstange
- 18, 19: Steuerscheibe
- 20, 21: Hebeleinrichtung
- 22: Sensor
- 23: Aktor
- 24: Steuerventil
- 25: Elektronik
- 26: Werkzeug
- 27: Sensor
- 28: Aktor
- 29: Steuerventil
- 30: Elektronik
- 32: zentrale Steuereinheit
- 33: Datenübertragung bzw. Daten- und Steuerbus
- 34: Unterprogramm
- 35: Konfigurationseinheit
- 36 - 45: Block
- 46: Steuerelement
- 47: Betätigungselement
- 48,49: Busknoten
- 50: Elektronik
- 50', 50": Eingänge
- 51: Sensor
- 52: Leitung
- 54: Versorgung
- 55, 56: Leitung
- 57: Elektronik
- 58: Buskoppler
- 59: Ventile
- 60: Zylinder
- 61: Blockversorgung
- 62: Sensoren
- 63: Leitungen
- 64: Codierelement
- 65: Regelgerät
- 66: Schutzkreis
- 67: Mehrfach-Gegenstecker
- 68: Wehrfachstecker
- 69, 70: Anschlüsse für Zu- und Abluft
- 71: elektrische Kontakte
- 72: Zentrierstift
- 73: Zentrieröffnung

## Patentansprüche

1. Fertigungs- und Montageautomat, mit einer Grundeinheit (2) mit einem Transportelement, welches beispielsweise von einem um eine vertikale Maschinenachse (V) drehbar angetriebenen Rotor gebildet ist, mit mehreren am Transportelement, beispielsweise am Umfang des Rotors vorgesehenen Aufnahmen (15) für Bauelemente oder Baugruppen, mit einem Antrieb (12) für das Transportelement (11), um die Aufnahmen (15) getaktet an Arbeitspositionen (3) vorbeizubewegen, sowie mit an Arbeitspositionen (3) an der Grundeinheit (2) montierbaren Funktionseinheiten, beispielsweise Arbeitsstationen (4) und/oder Werkzeugen (23), die über wenigstens eine Daten- und Steuerstrecke (33) mit einer zentralen elektronischen Steuereinrichtung (32) in Verbindung stehen, **dadurch gekennzeichnet,**
**daß** den Funktionseinheiten (4, 26) jeweils eine jede Einheit identifizierende elektrische Codierung zugeordnet ist, die über die Daten- und Steuerstrecke (33) von der jeweiligen Funktionseinheit (4, 26) an die zentrale Steuereinheit (32) übermittelbar ist, und
**daß** die jeweilige Codierung eine den Typ der jeweiligen Funktionseinheit (4, 26) angebende Geräteidentifikation (IG) und eine die Position der jeweiligen Funktionseinheit (4, 26) angebende Positionsidentifikation (IP) enthält.

2. Fertigungs- und Montageautomat nach Anspruch 1, **dadurch gekennzeichnet, daß** die Codierung eine Identifikation (IW) enthält, die die Kombination und/oder den Typ mehrerer an einer Arbeitsposition (3) vorhandener Funktionseinheiten (4, 26) angibt.

3. Fertigungs- und Montageautomat nach Anspruch 1 oder 2, **dadurch gekennzeichnet, daß** die Geräteidentifikation oder -Codierung (IG) in der Funktionseinheit (4)

4. Fertigungs- und Montageautomat nach einem der vorhergehenden Ansprüche, **dadurch gekennzeichnet, daß** die Codierung und/oder die diese Codierung bildenden Identifikationen (IG, IP, IW) in einer Elektronik (25, 30) der jeweiligen Funktionseinheit (4, 26) elektrisch gebildet und/oder abgelegt ist, wobei die Codierung, insbesondere die Gerätecodierung beispielsweise durch elektrische Kontakte, z.B. durch eine entsprechende Kontaktierung und/oder Belegung von Kontakten eines Mehrfachsteckers oder eines Mehrfachgegensteckers zum Anschluß an die Daten- und Steuerstrecke gebildet ist, und/oder durch Programmierung eines Speicherelementes oder Speicherchips der Elektronik (25, 30) der jeweiligen Funktionseinheit (4, 26) erfolgt ist.

5. Fertigungs- und Montageautomat nach einem der vorhergehenden Ansprüche, **gekennzeichnet durch** Mittel zur Bildung einer Identifikation (IP) in Abhängigkeit von der Position der jeweiligen Funktionseinheit (4, 26) an der Grundeinheit.

6. Fertigungs- und Montageautomat nach einem der vorhergehenden Ansprüche, **dadurch gekennzeichnet, daß** die Daten- und Steuerstrecke (33) von einem Bussystem gebildet ist, beispielsweise von einem elektrische Leiter aufweisenden Leitungsbus oder einem Lichtleiter-Bus.

7. Fertigungs- und Montageautomat nach einem der vorhergehenden Ansprüche, **dadurch gekennzeichnet, daß** die Funktionseinheiten (4, 26) eigene Sensoren (22, 27) und/oder Aktoren (23, 28) und/oder Steuerelemente (25, 29) aufweisen, wobei beispielsweise die Sensoren (22, 27) und/oder Aktoren (23, 28) und/oder Steuerelemente (24, 29) über die Daten- und Steuerstrecke (33) unmittelbar und/oder mittelbar mit der zentralen Steuereinrichtung (32) in Verbindung stehen.

8. Fertigungs- und Montageautomat nach einem der vorhergehenden Ansprüche, **dadurch gekennzeichnet, daß** in der zentralen Steuereinheit (32) eine Ist-Konfiguration des Fertigungs- und Montageautomaten abgelegt ist, und daß die zentrale Steuereinheit (32) die tatsächliche Konfiguration, die aus der an die Steuereinheit (32) übermittelten Codierung der Funktionseinheiten (4, 26) abgeleitet ist, mit der Sollkonfiguration vergleicht,
wobei beispielsweise die Steuereinheit (32) ein den Fertigungs- und Montageautomaten und/oder die Funktionseinheiten (4, 26) steuerndes Steuerprogramm zum Ansteuern des Automaten dann freigibt, wenn die Ist-Konfiguration und die Sollkonfiguration übereinstimmen.

9. Fertigungs- und Montageautomat nach einem der vorhergehenden Ansprüche, **dadurch gekennzeichnet, daß** an der Grundeinheit oder Grundmaschine (2) an Arbeitspositionen (3) erste Anschlüsse zur Energie- und Datenübertragung für Funktionseinheiten (26) einer ersten Gruppe (A) vorgesehen sind, und daß die Anschlüsse mit an der Grundeinheit (2) vorgesehenen Steuerelementen,
beispielsweise Ventilen (46), sowie mit wenigstens einer an der Grundeinheit (2) vorgesehenen Elektronik (50) verbunden sind,
wobei beispielsweise an den Arbeitspositionen (3) der Grundeinheit (2) für jede Funktionseinheit einer ersten Gruppe (A) ein Signalanschluß (15") vorgesehen ist, der beim Anbringen einer Funktionseinheit ein Signal an die Elektronik (50) und/oder Steuereinheit (32) liefert, welches das Vorhandensein einer Funktionseinheit der ersten Gruppe (A) an der Arbeitsposition (3) anzeigt,
und/oder
wobei beispielsweise für sämtliche Funktionseinheiten der ersten Gruppe (A) oder aber für eine bestimmte Anzahl solcher Funktionseinheiten an der Grundmaschine (2) jeweils ein gemeinsamer Busknoten (48, 49) zur Datenübertragung zwischen dem Daten- und Steuerbus (33) und den Funktionseinheiten oder einer Elektronik (50) der ersten Gruppe (A) vorgesehen ist.

10. Fertigungs- und Montageautomat nach einem der vorhergehenden Ansprüche, **dadurch gekennzeichnet, daß** bei Funktionseinheiten einer zweiten Gruppe (B/C) jede Funktionseinheit einen an den Daten- und Steuerbus (33) anschließbaren Buskoppler (58) aufweist, für eine Datenübertragung zwischen dem Daten- und Steuerbus (33) und einer an der Funktionseinheit der zweiten Gruppe (B/C) vorgesehenen Elektronik (57),
wobei beispielsweise in der Elektronik (57) der Funktionseinheiten einer zweiten Gruppe (B/C) u.a. auch die Geräteidentifikation oder Stationscodierung (IG) abgelegt ist und daß die Elektronik (57) aufgrund einer an der jeweiligen Arbeitsposition (3) vorgesehenen Codierung (64) die Ortsidentifikation oder Ortscodierung (IP) bildet, und/oder
wobei beispielsweise die Elektronik (57) der Funktionseinheit der zweiten Gruppe (B/C) mit Sensoren (62) und/oder mit Steuerelementen, beispielsweise Ventilen (59) zur Steuerung von Stellgliedern (60) und/oder mit Steuerelementen (65) zum Steuern von elektrischen Antrieben oder Verbrauchern zusammenwirkt.

11. Fertigungs- und Montageautomat nach einem der vorhergehenden Ansprüche, **gekennzeichnet durch** an den Funktionseinheiten (4, 26) vorgesehenen Stecker (68), die bei Positionieren der jeweiligen Funktionseinheit an eine Arbeitsposition (3) mit einem dortigen Gegenstecker (67) zusammenwirken, und zwar für die gesamte Signal- und Energieübertragung zwischen der Grundeinheit oder Grundmaschine (2) und der jeweiligen Funktionseinheit (4, 26).

12. Fertigungs- und Montagemaschine nach einem der vorhergehenden Ansprüche, **dadurch gekennzeichnet, daß** mehrere, von Funktionseinheiten an Arbeitspositionen (3) gebildete und in Bewegungsrichtung des Transportelementes (11) aufeinanderfolgende Arbeitsstationen eine Fertigungs- und/oder Bearbeitungsstrecke für ein Produkt bilden, und daß am umlaufenden Transportelement mehrere Fertigungs- und/oder Bearbeitungsstrecken für die parallele Bearbeitung oder Fertigung vorgesehen sind.

## Claims

1. Automatic manufacturing and assembly machine, with a base unit (2) with a transportation element which for example is formed by a rotor that is driven rotatably around a vertical machine axis (V), with several receivers (15) for structural elements or components provided on the transportation element, for example on the circumference of the rotor, with a drive (12) for the transportation element (11) in order to move the receivers (15) past work positions (3) in a cycled manner, as well as with functional units that can be mounted at work positions (3) on the base unit (2), for example work stations (4) and/or tools (23), which are connected via at least one data- and control section (33) to a central electronic control device (32),
**characterised in that**
assigned to the functional units (4, 26) there is in each case an electrical coding which identifies each unit and which can be transmitted from the respective functional unit (4, 26) to the central control unit (32) via the data- and control section (33),
and that the respective coding contains a device identification (IG) that states the type of the respective functional unit (4, 26) and a position identification (IP) that states the position of the respective functional unit (4, 26).

2. Automatic manufacturing and assembly machine in accordance with claim 1, **characterised in that** the coding contains an identification (IW) that states the combination and/or the type of several functional units (4, 26) that are present at a work position (3).

3. Automatic manufacturing and assembly machine in accordance with claim 1 or 2, **characterised in that** the device identification or device coding (IG) is filed in the function unit (4).

4. Automatic manufacturing and assembly machine in accordance with one of the preceding claims,
**characterised in that** the coding and/or the identifications (IG, IP, IW) that form this coding are formed electrically and/or filed in an electronics unit (25, 30) of the respective functional unit (4, 26), wherein the coding, in particular the device coding, is for example effected through electrical contacts, e.g. through a corresponding contacting and/or configuration of contacts of a multiple plug or of a multiple counterpart plug for connection to the data- and control section, and/or through programming of a storage element or storage chip of the electronics unit (25, 30) of the respective functional unit (4, 26).

5. Automatic manufacturing and assembly machine in accordance with one of the preceding claims, **characterised by** means for forming an identification (IP) depending on the position of the respective functional unit (4, 26) on the base unit.

6. Automatic manufacturing and assembly machine in accordance with one of the preceding claims, **characterised in that** the data- and control section (33) is formed by a bus system, for example by a lead bus or fibre-optic light guide bus that has electrical conductors.

7. Automatic manufacturing and assembly machine in accordance with one of the preceding claims, **characterised in that** the functional units (4, 26) have their own sensors (22, 27) and/or actuators (23, 28) and/or control elements (25, 29), wherein for example the sensors (22, 27) and/or actuators (23, 28) and/or control elements (24, 29) are directly and/or indirectly connected to the central control device (32) via the data- and control section (33).

8. Automatic manufacturing and assembly machine in accordance with one of the preceding claims, **characterised in that** filed in the central control unit (32) is an actual configuration of the automatic manufacturing and assembly machine, and that the central control unit (32) compares the actual configuration that is derived from the coding of the functional units (4, 26) that is conveyed to the control unit (32) with the reference configuration,
wherein for example the control unit (32) then releases a control program, which controls the automatic manufacturing and assembly machine and/or the functional units (4, 26), to trigger the automatic machine when the actual configuration and the reference configuration correspond.

9. Automatic manufacturing and assembly machine in accordance with one of the preceding claims, **characterised in that** provided on the base unit or base machine (2) at work positions (3) are first connections for transmitting energy and data for functional units (26) of a first group (A), and that the connections are connected to control elements, for example valves (46), which are provided on the base unit (2), as well as to at least one electronics unit (50) that is provided on the base unit (2), wherein for example a signal connection (15") is provided at the work positions (3) of the base unit (2) for each functional unit of a first group (A), which [signal connection] supplies a signal to the electronics unit (50) and/or control unit (32) when a functional unit is fitted, which indicates the presence of a functional unit of the first group (A) at the work position (3), and/or
wherein for example for all functional units of the first group (A) or for a particular number of such functional units on the base machine (2), in each case a common bus node (48, 49) is provided for data transmission between the data- and control bus (33) and the functional units or an electronics unit (50) of the first group (A).

10. Automatic manufacturing and assembly machine in accordance with one of the preceding claims, **characterised in that** in the case of functional units of a second group (B/C), each functional unit has a bus coupler (58) that can be connected to the data- and control bus (33), for data transmission between the data- and control bus (33) and an electronics unit (57) provided on the functional unit of the second group (B/C),
wherein for example the device identification or station coding (IG), amongst other things, is also filed in the electronics unit (57) of the functional units of a second group (B/C), and that on the basis of a coding (64) provided at the respective work position (3) the electronics unit (57) forms the location identification or location coding (IP), and/or
wherein for example the electronics unit (57) of the functional unit of the second group (B/C) works together with sensors (62) and/or with control elements , for example valves (59), to control actuators (60) and/or with control elements (65) to control electrical drives or consumers.

11. Automatic manufacturing and assembly machine in accordance with one of the preceding claims, **characterised by** plugs (68) provided on the functional units (4, 26), which [plugs] work together with a counterpart plug (67) located there when the respective functional unit is positioned at a work position (3), and in fact for the entire signal- and energy transmission between the base unit or base machine (2) and the respective functional unit (4, 26).

12. Automatic manufacturing and assembly machine in accordance with one of the preceding claims, **characterised in that** several work stations, which are formed by functional elements at work positions (3) and follow on from one another in the direction of movement of the transportation element (11), form a manufacturing and/or processing section for a product, and that provided on the circulating transportation element are several manufacturing and or processing sections for parallel processing or manufacture.

## Revendications

1. Machine pour fabrication et montage, comprenant une unité de base (2) avec un élément de transport qui est formé par exemple par un rotor entraîné de manière rotative autour d'un axe (V) de machine vertical, avec plusieurs logements (15) prévus sur l'élément de transport, par exemple à la périphérie du rotor, pour des éléments de construction ou des groupes de construction, avec un entraînement (12) pour l'élément de transport (11) pour faire passer les logements (15) devant des positions de travail (3) de manière cyclique ainsi qu'avec des unités fonctionnelles pouvant être montées sur l'unité de base (2) dans les positions de travail (3), par exemple des postes de travail (4) et / ou des outils (23) qui sont en communication avec un dispositif de commande (32) centrale électronique par l'intermédiaire d'au moins un chemin de données et de commande (33), **caractérisée**
**en ce qu'**aux unités fonctionnelles (4, 26) est associé chaque fois un codage électrique identifiant chaque unité, codage qui peut être transmis de l'unité fonctionnelle (4, 26) concernée à l'unité de commande (32) centrale par l'intermédiaire du chemin de données et de commande (33), et
**en ce que** le codage concerné comprend une identification d'outil (IG) indiquant le type de l'unité fonctionnelle (4, 26) concernée et une identification de position (IP) indiquant la position de l'unité fonctionnelle (4,26) concernée.

2. Machine pour fabrication et montage selon la revendication 1 **caractérisée en ce que** le codage comprend une identification (IW) qui indique la combinaison et / ou le type de plusieurs unités fonctionnelles (4, 26) se trouvant dans une position de travail (3).

3. Machine pour fabrication et montage selon la revendication 1 ou 2 **caractérisée en ce que** l'identification ou le codage d'outil (IG) est stocké dans l'unité fonctionnelle (4).

4. Machine pour fabrication et montage selon une des revendications précédentes **caractérisée en ce que** le codage et / ou les identifications (IG, IP, IW) formant ce codage est formé électriquement et / ou est stocké dans un circuit électronique (25, 30) de l'unité fonctionnelle (4, 26) concernée, le codage, en particulier le codage des outils étant formé par exemple par des contacts électriques, p. ex. par un bonding correspondant et / ou une occupation des contacts d'un connecteur multiple ou d'un contre-connecteur multiple pour le raccordement au chemin de données et de commande, et / ou étant réalisé par la programmation d'un élément de mémoire ou d'une puce du circuit électronique (25, 30) de l'unité fonctionnelle (4, 26) concernée.

5. Machine pour fabrication et montage selon une des revendications précédentes **caractérisée par** un moyen pour la formation d'une identification (IP) en fonction de la position de l'unité fonctionnelle (4,26) concernée sur l'unité de base.

6. Machine pour fabrication et montage selon une des revendications précédentes **caractérisée en ce que** le chemin de données et de commande (33) est formé par un système de bus, par exemple par un bus conducteur présentant des conducteurs électriques ou par un bus à fibres optiques.

7. Machine pour fabrication et montage selon une des revendications précédentes **caractérisée en ce que** les unités fonctionnelles (4, 26) présentent des capteurs (22, 27) et / ou des actionneurs (23, 28) et / ou des éléments de commande (24, 29) qui lui sont propres, les capteurs (22, 27) et ou les actionneurs (23, 28) et / ou les éléments de commande (24, 29) étant directement et / ou indirectement en communication avec le dispositif de commande (32) centrale.

8. Machine pour fabrication et montage selon une des revendications précédentes **caractérisée en ce qu'**une configuration réelle de la machine pour fabrication et montage est stockée dans l'unité de commande (32) centrale et **en ce que** l'unité de commande (32) centrale compare la configuration effective qui est déduite du codage des unités fonctionnelles (4, 26) transmis à l'unité de commande (32) avec la configuration de consigne, l'unité de commande (32) lançant par exemple un programme de commande commandant la machine pour fabrication ou montage et / ou les unités fonctionnelles (4, 26) pour commander la machine quand la configuration réelle et la configuration de consigne concordent.

9. Machine pour fabrication et montage selon une des revendications précédentes **caractérisée en ce que** des premiers raccordements pour la transmission d'énergie et de données pour les unités fonctionnelles (26) d'un premier groupe (A) sont prévus sur l'unité de base ou la machine de base (2) dans les positions de travail (3) et **en ce que** les raccordements sont reliés à des éléments de commande prévus sur l'unité de base (2), par exemple des soupapes (46), ainsi qu'aà au moins un circuit électrique (50) prévu sur l'unité de base (2),
une connexion signalisatrice (15") étant prévue par exemple dans les positions de travail (3) de l'unité de base (2) pour chaque unité fonctionnelle d'un premier groupe (A), laquelle fournit un signal au circuit électronique (50) et / ou à l'unité de commande (32) lors de la mise en place d'une unité fonctionnelle, signal qui montre la présence d'une unité fonctionnelle du premier groupe (A) dans la position de travail (3), et / ou
un noeud (48, 49) de bus commun pour la transmission de données étant prévu chaque fois entre le bus (33) de données et de commande et les unités fonctionnelles ou un circuit électronique (50) du premier groupe (A) par exemple pour toutes les unités fonctionnelles du premier groupe (A) ou pour un nombre déterminé de ces unités fonctionnelles sur la machine de base (2).

10. Machine pour fabrication et montage selon une des revendications précédentes **caractérisée en ce que**, dans le cas d'unités fonctionnelles d'un deuxième groupe (B / C), chaque unité fonctionnelle présente un coupleur (58) de bus pouvant être raccordé au bus (33) de données et de commande pour une transmission des données entre le bus (33) de données et de commande et un circuit électronique (57) prévu sur l'unité fonctionnelle du deuxième groupe (B / C),
l'identification des outils ou le codage du poste (IG), entre autres, étant également stocké par exemple dans le circuit électronique (57) des unités fonctionnelles d'un deuxième groupe (B / C) et **en ce que** le circuit électronique (57) forme l'identification de lieu ou le codage de lieu (IP) en raison d'un codage (64) prévu dans la position de travail (3) concernée, et / ou
le circuit électronique (57) de l'unité fonctionnelle du deuxième groupe (B / C) coopérant par exemple avec des capteurs (62) et / ou avec des éléments de commande, par exemple des soupapes (59), pour commander les organes de réglage (60) et / ou avec des éléments de commande (65) pour commander des entraînements ou consommateurs électriques.

11. Machine pour fabrication et montage selon une des revendications précédentes **caractérisée par** des connecteurs (68) prévus sur les unités fonctionnelles (4, 26), qui coopèrent lors du positionnement de l'unité fonctionnelle concernée dans une position de travail (3) avec un contre-connecteur local (67) et en fait pour l'ensemble de la transmission de signaux et d'énergie entre l'unité de base ou la machine de base (2) et l'unité fonctionnelle (4, 26) concernée.

12. Machine pour fabrication et montage selon une des revendications précédentes **caractérisée en ce que** plusieurs postes de travail formés par des unités fonctionnelles dans des positions de travail (3) et se succédant dans le sens du mouvement de l'élément de transport (11) forment un chemin de fabrication et / ou de traitement pour un produit et **en ce que** plusieurs chemins de fabrication et/ou de traitement sont prévus sur l'élément de transport circulant pour le traitement ou la fabrication en parallèle.
